# EUROPEAN PATENT SPECIFICATION

(11) **EP 1 433 643 B1**
(45) Date of publication and mention of the grant of the patent: **04.05.2016**
(21) Application number: 04006132.7
(22) Date of filing: 15.11.1999
(51) Int. Cl.: B60K 6/26, B60K 6/28, B60K 6/365, B60K 6/40, B60K 6/405, B60K 6/445, B60L 11/14, B60W 10/26

(54) **Driving apparatus**
Antriebsapparat
Dispositif d'entraînement

(30) Priority: 16.11.1998 JP 32503898; 18.10.1999 JP 29565899
(43) Date of publication of application: 30.06.2004
(62) Divisional of application: 99122041.9
(73) Proprietor: AISIN AW CO., LTD., Anjo-shi, Aichi 444-1192 (JP)
(72) Inventor: Yamaguchi, Kozo, Chiryu-shi Aichi-ken, 472-0034 (JP); Hotta,Yutaka, Anjo-shi, Aichi-ken 444-1192 (JP); Hara, Takeshi, Anjo-shi, Aichi-ken 444-1192 (JP); Takenaka, Masayuki, Anjo-shi, Aichi-ken 444-1192 (JP); Maki, Koya, Anjo-shi, Aichi-ken 444-1192 (JP); Agata, Hiromichi, Anjo-shi, Aichi-ken 444-1192 (JP)
(74) Representative: Vossius & Partner Patentanwälte Rechtsanwälte mbB

(56) References cited:
- DE-A- 4 322 676
- US-A- 5 508 574
- US-A- 5 531 285
- US-A- 5 650 713

## Description

Hitherto, an electrically driven vehicle has been provided with a driving apparatus and a drive motor, a generator-motor and an inverter apparatus for driving the driving apparatus are installed to arrange at the driving apparatus. Further, in the inverter apparatus, by driving an inverter for the drive motor formed by a bridge circuit, direct current supplied from a battery is converted into three phases of phase current, the respect phase current is supplied to the drive motor, further, by driving an inverter for the generator-motor formed by a bridge circuit, three phases of phase current supplied from the generator-motor is converted into direct current and the direct current is supplied to the battery.

For that purpose, a control apparatus is installed to arrange, a pulse width modulating signal is generated by the control apparatus and the pulse width modulating signal is outputted to the respective bridge circuits to thereby switch transistors of the respective bridge circuits.

DE 43 22 676 A1 relates to an internal combustion engine comprising two motor generators and an inverter housed within a case. The two generators are connected to an engine via a rotation transmitting means, an induction motor and a control device. The generators have differing characteristics such that the minimum speeds at which they become effective to generate power are different to one another. A controller receiving power from a rectifier or battery provides A/C power at an adjustable frequency to an induction motor which drives the automobile. The controller also controls excitation of the generators in response to the outpot voltage of the rectifier.

However, according to the related art driving apparatus, it is necessary to respectively connect the inverter for the drive motor to the drive motor and the inverter for the generator-motor to the generator-motor and accordingly, the driving apparatus becomes large-sized.

Further, when a smoothing condenser common to the respective bridge circuits is intended to install to arrange to the inverter for the drive motor and the inverter for the generator-motor to stabilize voltage generated when the transistors of the respective bridge circuits are made ON and OFF, respective lead wires for connecting the respective transistors with the drive motor as well as the generator-motor are prolonged and wirings become complicated.

Further, particularly, according to a driving apparatus in which a drive motor and a generator-motor are installed to arrange on two different axis lines, there is no technology of integrating the inverter for the drive motor, the inverter for the generator-motor and the driving apparatus case and the driving apparatus becomes further large-sized.

It is an object of the invention to provide a driving apparatus resolving the problem of the related art driving apparatus, capable of being downsized and capable of simplifying wirings.

This object is solved with a driving apparatus according to the invention including the features of claim 1.

Preferred embodiments are defined in the dependent claims.
Fig. 1 is a sectional view of a driving apparatus according to a first embodiment of the invention;
Fig. 2 is a conceptual view of an engine and the driving apparatus according to the first embodiment of the invention;
Fig. 3 is a first outline view of the driving apparatus according to the first embodiment of the invention;
Fig. 4 is a second outline view of the driving apparatus according to the first embodiment of the invention;
Fig. 5 is a sectional view showing essential portions of the driving apparatus according to the first embodiment of the invention;
Fig. 6 is a plane view of an inverter apparatus according to the first embodiment of the invention;
Fig. 7 is a sectional view of a driving apparatus according to a second embodiment of the invention;
Fig. 8 is a plane view of an inverter apparatus according to the second embodiment of the invention;
Fig. 9 is a sectional view of a driving apparatus according to a third embodiment of the invention;
Fig. 10 is a plane view of an inverter apparatus according to the third embodiment of the invention;
Fig. 11 is a sectional view of a driving apparatus according to a fourth embodiment of the invention;
Fig. 12 is a plane view of an inverter apparatus according to the fourth embodiment of the invention;
Fig. 13 is a sectional view of a driving apparatus according to a fifth embodiment of the invention;
Fig. 14 is a plane view of an inverter apparatus according to the fifth embodiment of the invention;
Fig. 15 is a sectional view of a driving apparatus according to a sixth embodiment of the invention; and
Fig. 16 is a plane view of an inverter apparatus according to the sixth embodiment of the invention.

A detailed explanation is given as follows of embodiments according to the invention in reference to the drawings. Further, in this case, an explanation is given of a vehicle having an engine, a drive motor and a generator-motor, that is, a hybrid type vehicle.

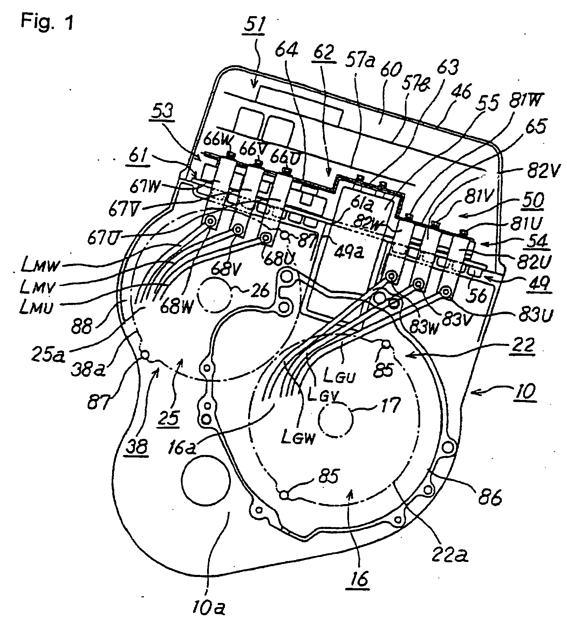

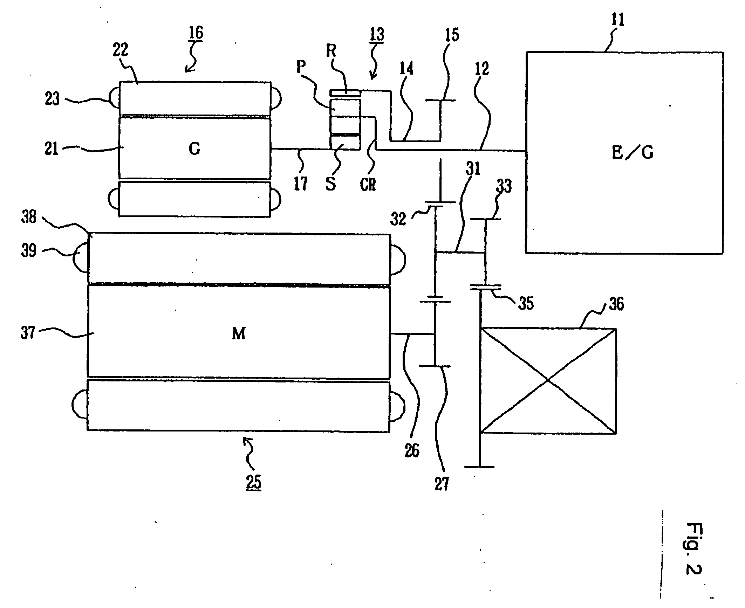

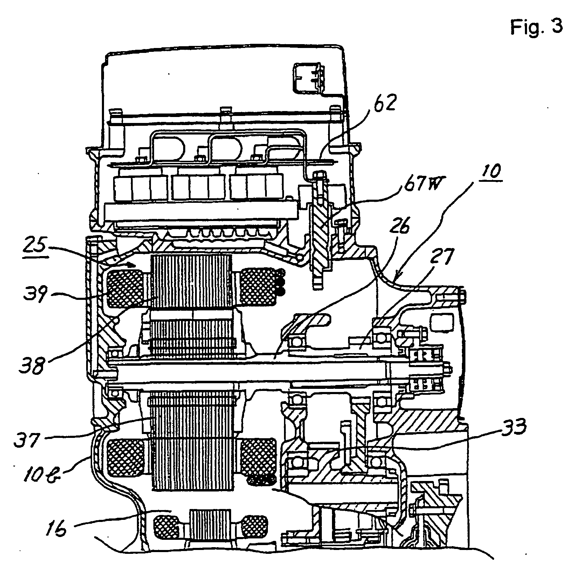

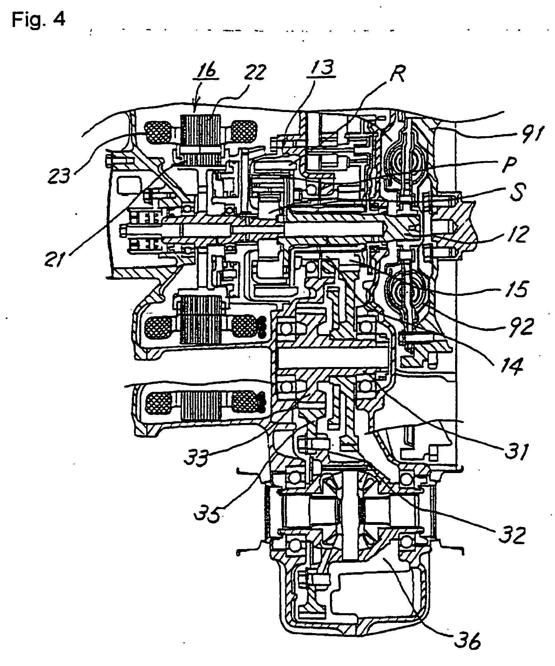

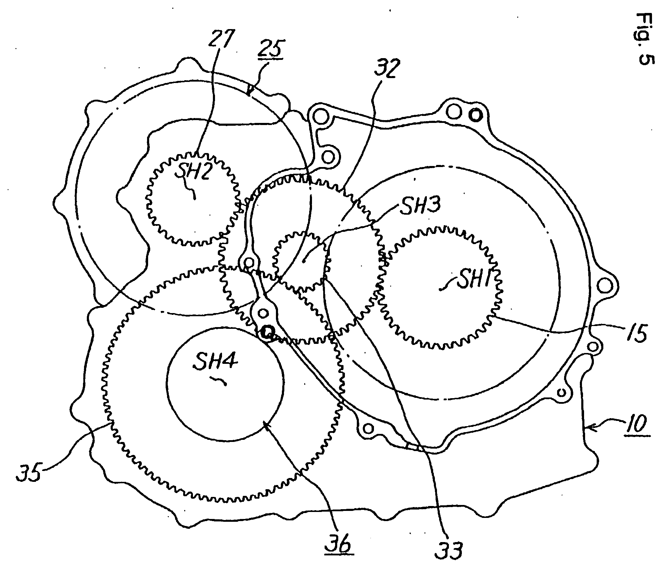

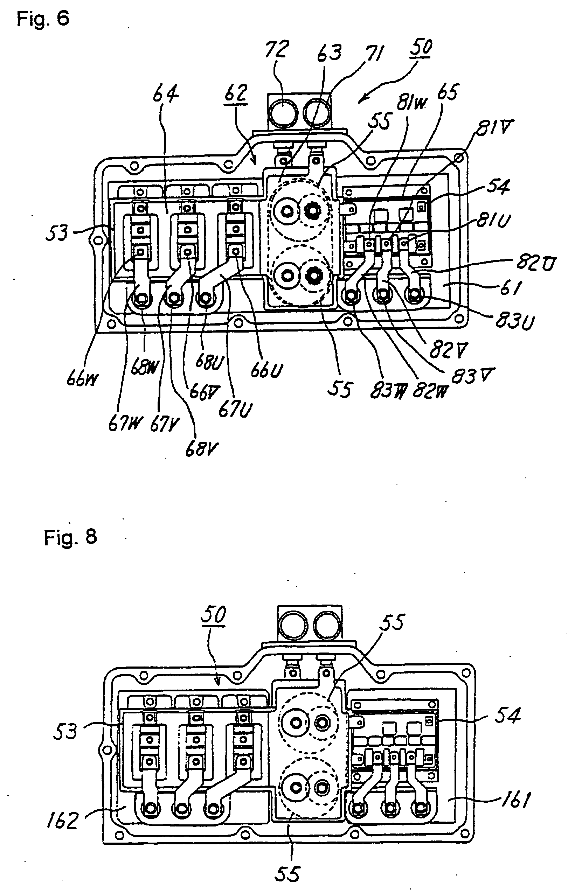

Fig. 1 is a sectional view of a driving apparatus according to a first embodiment of the invention, Fig. 2 is a conceptual view of an engine and a driving apparatus according to the first embodiment of the invention, Fig. 3 is a first outline view of the driving apparatus according to the first embodiment of the invention, Fig. 4 is a second outline view of the driving apparatus according to the first embodiment of the invention, Fig. 5 is a sectional view showing essential portions of the driving apparatus according to the first embodiment of the invention and Fig. 6 is a plane view of an inverter apparatus according to the first embodiment of the invention.

In the drawings numeral 11 designates an engine (E/G), numeral 12 designates an output shaft installed to arrange on the first axis line SH1 for outputting rotation generated by driving the engine 11, numeral 13 designates a planetary gear unit as a differential gear apparatus installed to arrange on the first axis line SH1 for distributing torque inputted via the output shaft 12, numeral 14 designates an output shaft as a connecting member installed to arrange on the first axis line SH1 and outputted with rotation after the torque has been distributed in the planetary gear unit 13, numeral 15 designates a counter drive gear as a first gear installed to arrange on the first axis line SH1 and fixed to the output shaft 14 and numeral 16 designates a generator-motor (G) installed to arrange on the first axis line SH1 and connected to the planetary gear unit 13 via a transmitting shaft 17. Further, the output shaft 14 is provided with a sleeve-like shape and is arranged to surround the output shaft 12. Further, the counter drive gear 15 is installed to arrange on the engine 11 side of the planetary gear unit 13.

The planetary gear unit 13 comprises a sun gear S as a first element, a pinion P in mesh with the sun gear S, a ring gear R as a second element in mesh with the pinion P and a carrier CR as a third element rotatably supporting the pinion P.

Further, the sun gear S is connected to the generator-motor 16 via the transmitting shaft 17, the ring gear R is connected to the counter drive gear 15 via the output shaft 14 and the carrier CR is connected to the engine 11 via the output shaft 12.

Further, the generator-motor 16 comprises a rotor 21 fixed to the transmitting shaft 17 and installed to arrange rotatably, a stator 22 installed to arrange at a surrounding of the rotor 21 and a coil 23 wound around the stator 22. The generator-motor 16 generates electric power by rotation inputted via the transmitting shaft 17. The coil 23 is connected to a battery, not illustrated, and supplies current to the battery.

Further, numeral 25 designates a drive motor (M) installed to arrange on a second axis line SH2 in parallel with the first axis line SH1 coaxial with the output shaft 12 and connected to the battery for generating rotation by being supplied with current from the battery, numeral 26 designates an output shaft installed to arrange on the second axis line SH2 for outputting rotation of the drive motor 25, and numeral 27 designates an output gear as a second gear installed to arrange on the second axis line SH2 and fixed to the output shaft 26. The drive motor 25 comprises a rotor 37 fixed to the output shaft 26 and installed to arrange rotatably, a stator 38 installed to arrange at a surrounding of the rotor 37 and a coil 39 wound around the stator 38.

Further, a counter shaft 31 is installed to arrange on a third axis line SH3 in parallel with the first axis line SH1 and the second axis line SH2 for rotating a drive wheel, not illustrated, in a direction the same as the rotation of the engine 11 and a counter driven gear 32 as a third gear is fixed to the counter shaft 31. Further, the counter driven gear 32 is in mesh with the counter drive gear 15 and the counter driven gear 32 is in mesh with the output gear 27, respectively, and rotation of the counter drive gear 15 and rotation of the output gear 27 are reverted and transmitted to the counter driven gear 32.

Further, the counter shaft 31 is fixed with a pinion drive gear 33 as a fourth gear having a number of teeth smaller than that of the counter driven gear 32.

Further, a large ring gear 35 as a fifth gear is installed to arrange on a fourth axis line SH4 in parallel with the first axis line SH1, the second axis line SH2 and the third axis line SH3 and the large ring gear 35 and the pinion drive gear 33 are in mesh with each other. Further, the large ring gear 35 is fixed with a differential apparatus 36, rotation transmitted to the large ring gear 35 is distributed by the differential apparatus 36 and is transmitted to the drive wheels. Further, in Figs. 2 and 4, positions of the counter driven gear 32 and the pinion drive gear 33 are respectively reverted for convenience of explanation. Further, a torque transmitting mechanism is constituted by the planetary gear unit 13, the generator-motor 16, the drive motor 25, the differential apparatus 36, other gears and the like. Further, as shown by Fig. 4, a flywheel 91 and a damper 92 are installed to arrange between the engine 11 and the output shaft 12.

In this case, the generator-motor 16 and the drive motor 25 are installed to arrange on the axis lines in parallel with each other and accordingly, a speed reduction ratio between the first axis line SH1 and the second axis line SH2 can freely be set. Accordingly, the degree of freedom of design of the torque transmitting mechanism can be promoted. As a result, the drive motor 25 and the generator-motor 16 can be driven under the best condition.

Meanwhile, numeral 10 designates a driving apparatus case formed by a metal having excellent heat conductivity and a drive motor and a generator-motor containing chamber 10a for containing the drive motor 25 and the generator-motor 16 is formed at inside of the driving apparatus case 10. Further, a driving apparatus is constituted by respective elements of the planetary gear unit 13, the generator-motor 16, the drive motor 25 and the differential apparatus 36, respective inverters of an inverter 53 for the drive motor and an inverter 54 for the generator-motor, mentioned later, and a heat sink, mentioned later.

An inverter case 46 as a control apparatus case is installed to arrange above a top wall 49 formed at an upper end portion of the driving apparatus case 10, an inverter and control board containing chamber 60 is formed by the top wall 49 and the inverter case 46, an inverter apparatus 50 for driving the driving apparatus and control boards 57a and 57b are arranged in the inverter and control board containing chamber 60 and various kinds of electronic parts and so on are attached onto the control boards 57a and 57b. Further, the inverter case 46 is formed by a metal. Further, a control apparatus 51 is constituted by the control boards 57a and 57b, the electronic parts and so on.

The inverter apparatus 50 is constituted by the inverter 53 for the drive motor formed as an inverter unit for the drive motor by a bridge circuit, not illustrated, the inverter 54 for the generator-motor formed as an inverter unit for the generator-motor by other bridge circuit, not illustrated, a smoothing condenser 55 installed to arrange commonly to the inverter 53 for the drive motor and the inverter 54 for the generator-motor. Further, a first inverter for operating the generator-motor 16 is constituted by the inverter 53 for the drive motor and a second inverter for operating the drive motor 25 is constituted by the inverter 54 for the generator-motor.

Further, the smoothing condenser 55 is installed to arrange in the drive motor and generator-motor containing chamber 10a to project an end portion thereof and to dispose a portion thereof on inner sides of common tangential lines of the drive motor 25 and the generator-motor 16 for smoothing voltage of a power source, not illustrated, that is, power source voltage to thereby stabilize voltage generated when transistors as switching elements of respective bridge circuits in the inverter 53 for the drive motor and the inverter 54 for the generator-motor, are made ON and OFF. Further, the inverter 53 for the drive motor and the inverter 54 for the generator-motor are installed to arrange to be separate from each other and contiguous to each other and are attached to the driving apparatus case 10 to be disposed in diameter directions of the drive motor 25 and the generator-motor 16. That is, the inverter 53 for the drive motor and the inverter 54 for the generator-motor are extended along a plane in parallel with the respective tangential lines of the drive motor 25 and the generator-motor 16. Accordingly, a dimension in the axial direction of the driving apparatus can be reduced and therefore, mountability of the driving apparatus in respect of a hybrid type vehicle in which a dimension in the width direction is restricted, particularly, a hybrid type vehicle of FF (front drive and front axle) type, can be promoted.

Further, a heat sink for radiating heat which hermetically closes an opening portion of the driving apparatus case 10 is constituted by the top wall 49 and a cover 61 and a portion of the partition wall is constituted by the heat sink between the driving apparatus case 10 and the inverter case 46. Further, inverters for the generator-motor and the drive motor are constituted by the inverter 53 for the drive motor and the inverter 54 for the generator-motor.

In this case, the inverter apparatus 50 is mounted above the heat sink and is attached to the cover 61 functioning as the attaching member and accordingly, the inverter apparatus 50 can be integrated to the driving apparatus case 10 as a sub assembly. Accordingly, not only steps of integrating the inverter apparatus 50 can be made independent but also operation of the inverter apparatus 50 can be confirmed before being integrated to the driving apparatus case 10.

Further, a portion of the partition wall is formed by the top wall 49 and accordingly, there is no need of using a special wall member for partitioning the drive motor and generator-motor containing chamber 10a from the inverter and control board containing chamber 60. Therefore, the driving apparatus can be made light-weighted.

Further, according to the inverter apparatus 50, by driving the inverter 53 for the drive motor, the direct current supplied from the battery can be converted into three phases of phase current and the respective phase current can be supplied to the drive motor 25 and by driving the inverter 54 for the generator-motor, three phases of phase current supplied from the generator-motor 16 can be converted into direct current and the direct current can be supplied to the battery.

Further, the partition wall and the heat sink are formed on one plane and commonly used for the inverter 53 for the drive motor and the inverter 54 for the generator-motor and accordingly, the driving apparatus can be downsized.

In this case, the inverter 53 for the drive motor and the inverter 54 for the generator-motor are integrated to form the inverter apparatus 50, the inverter apparatus 50, the drive motor 25 and the generator-motor 16 are integrated and therefore, there is no need of connecting the inverter 53 for the drive motor to the drive motor 25 and the inverter 54 for the generator-motor to the generator-motor 16 separately from each other. Accordingly, the driving apparatus can be downsized.

Further, a groove is formed at an upper face of the top wall 49 and a medium flow path 56 is formed by covering the groove by the cover 61. The cover 61 is formed by a metal having excellent heat conductivity. Further, the medium flow path 56 is connected to a radiator, not illustrated, and cooling water, not illustrated, as a medium flows in the medium flow path 56. Cooling water temperature of which is elevated by receiving heat from the top wall 49 is delivered to the radiator and is cooled by the radiator.

Accordingly, not only the inverter apparatus 50 and the control apparatus 51 can be cooled directly and sufficiently but also the driving apparatus case 10 is cooled and by cooling oil, not illustrated, flowing in the driving motor and the generator-motor containing chamber 10a, the drive motor 25 and the generator-motor 16 can also be cooled. In this case, by cooling water flowing in the common medium flow path 56, the inverter 53 for the drive motor and the inverter for the generator-motor can be cooled and accordingly, the medium flow path 56 can be simplified and the driving apparatus can be downsized. Further, by cooling the driving apparatus case 10, the oil flowing in the drive motor and generator-motor containing chamber 10a can be cooled and accordingly, an oil cooler is dispensed with and the oil path can be simplified.

The stator 22 of the generator-motor 16 is supported by two pieces of pins 85 both ends of which are fixed to the driving apparatus case 10 and a space 86 is formed between an outer peripheral face 22a of the stator 22 and the driving apparatus case 10. Similarly, the stator 38 of the drive motor 25 is supported by two pieces of pins 87 both ends of which are fixed to the driving apparatus case 10 and a space 88 is formed between an outer peripheral face 38a of the stator 38 and the driving apparatus case 10. Accordingly, by supplying oil to the spaces 86 and 88, the generator-motor 16 and the drive motor 25 can be cooled.

Further, a bottomed recess portion 49a is formed substantially at a central portion of the top wall 49 to project to a side of the generator-motor 16 for containing the smoothing condenser 55 and a hole 61a is formed substantially at a central portion of the cover 61 to penetrate the smoothing condenser 55 in correspondence with the upper opening of the recess portion 49a. In this way, the smoothing condenser 55 is contained in the recess portion 49a to project an end portion thereof from the top wall 49 to the side of the generator-motor 16, a portion thereof is disposed on inner sides of the tangential lines common to the generator-motor 16 and the drive motor 25 and accordingly, a dead space of the drive motor and generator-motor containing chamber 10a can be reduced and the driving apparatus can be downsized.

A main wiring board 62 is arranged above the inverter 53 for the drive motor, the inverter 54 for the generator-motor and the smoothing condenser 55 spaced apart therefrom by a predetermined interval. The main wiring board 62 is constituted by a common wiring board portion 63 for connecting the smoothing condenser 55 and the battery via terminals 71 and 72, a wiring board portion 64 for motor disposed above the inverter 53 for the drive motor for connecting the wiring board portion 63 and the inverter 53 for the drive motor and a wiring board portion 65 for generator disposed above the inverter 54 for the generator-motor for connecting the wiring board portion 63 and the inverter 54 for the generator-motor.

In this case, the main wiring board 62 is extended substantially linearly and accordingly, the main wiring board 62 can be shortened. Therefore, the L component can be reduced. Further, the drive motor 25 and the generator-motor 16 are connected via the smoothing condenser 55 and accordingly, supply of electric power between the drive motor 25 and the generator-motor 16 can be smoothed.

Output bus bars 67U, 67V and 67W are connected between output terminals 66U, 66V and 66W of the inverter 53 for the drive motor and terminals 68U, 68V and 68W of the drive motor 25 and input bus bars 82U, 82V and 82W are connected between input terminals 81U, 81V and 81W of the inverter 54 for the generator-motor and terminals 83U, 83V and 83W of the generator-motor 16. Further, in order to connect the drive motor 25 with the inverter 53 for the drive motor, first lead wires L_{MU}, L_{MV} and L_{MW} and the terminals 68U, 68V and 68W are connected and in order to connect the generator-motor 16 with the inverter 54 for the generator-motor, second lead wires L_{GU}, L_{GV} and L_{GW} are connected to the terminals 83U, 83V and 83W.

Further, any of the first and the second lead wires L_{MU}, L_{MV}, L_{MW}, L_{GU}, L_{GV} and L_{GW} is taken out from one end side in the axial direction of each of the drive motor 25 and the generator-motor 16, according to the embodiment, from the side of an engine attaching face for attaching the engine 11 to the driving apparatus case 10.

Further, an outer diameter of the output gear 27 is extremely smaller than an outer diameter of the drive motor 25 and accordingly, there can be utilized a dead space formed in the drive motor and generator-motor containing chamber 10a by a difference between the outer diameter of the output gear 27 and the outer diameter of the drive motor 25. That is, there is constituted a gear train for transmitting power of the drive motor 25 to the differential apparatus 36 by the output gear 27, the counter driven gear 32, the pinion drive gear 33 and the large ring gear 35 and the dead space is formed on an outer side in a diameter direction within a range of a length in the axial direction of the gear train. Hence, the dead space can effectively be utilized by arranging the output bus bars 67U, 67V and 67V and the terminals 83U, 83V and 83W in the dead space.

Accordingly, operation of connecting the first lead wires L_{MU}, L_{MV} and L_{MW} with the terminals 68U, 68V and 68W and operation of connecting the second lead wires L_{GU}, L_{GV} and L_{GW} with the terminals 83U, 83V and 83W, can be carried out on the same side and accordingly, the operation can be simplified. As a result, the integrating performance of the drive motor 25 and the generator-motor 16 can be promoted. Further, the first and the second lead wires L_{MU}, L_{MV}, L_{MW}, L_{GU}, L_{GV} and L_{GW} are taken out from the engine attaching face and connected to the output bus bars 67U, 67V and 67W and terminals 83U, 83V and 83W in the dead space and accordingly, the dead space of the drive motor and generator-motor containing chamber 10a can be reduced and the driving apparatus can be downsized. Further, the first and the second lead wires L_{MU}, L_{MV}, L_{MW}, L_{GU}, L_{GV} and L_{GW} are not taken out from the side of a rear cover 10b of the driving apparatus case 10 and accordingly, the rear cover 10b is not projected and can be formed flatly. Accordingly, when the driving apparatus is mounted to a hybrid type vehicle, a side member of the hybrid type vehicle and the rear cover 10b can be prevented from interfering with each other.

Further, by generating a pulse width modulating signal by a base drive circuit for the drive motor, not illustrated, of the control apparatus 51 and inputting the pulse width modulating signal to respective transistors of respective circuits of the inverter 53 for the drive motor to thereby switch the respective transistors, direct current supplied from the battery via the smoothing condenser 55 is converted into phase current as alternating current during a time period of flowing between emitters and collectors of the respective transistors and the phase current is outputted from the respective output terminals 66U, 66V and 66W to the output bus bars 67U, 67V and 67W. Therefore, by driving the drive motor 25, the drive wheel is rotated and the hybrid type vehicle can be run.

Further, by generating a pulse width modulating signal by a base drive circuit for the generator-motor, not illustrated, of the control apparatus 51 and inputting the pulse width modulating signal to respective transistors of respective bridge circuits of the inverter 54 for the generator-motor, phase current generated by the generator-motor 16 is inputted to the respective input terminals 81U, 81V and 81W via the input bus bars 82U, 82V and 82W and is converted into direct current during a time period of flowing between emitters and collectors.

Meanwhile, the top wall 49 is inclined such that the top wall 49 is higher on the side of the drive motor 25 of the drive motor and generator-motor containing chamber 10a and is lower on the side of the generator-motor 16, that is, a front side (right side in Fig. 1) in the progressing direction of the hybrid type vehicle is on the lower side and the inverter 53 for the drive motor is installed to arrange above the drive motor 25 and the inverter 54 for the generator-motor is installed to arrange above the generator-motor 16, respectively. Further, the respective transistors of the respective bridge circuits of the inverter 53 for the drive motor and the drive motor 25 are connected by the output bus bars 67U, 67V and 67W and the respective transistors of the respective bridge circuits of the inverter 54 for the generator-motor and the generator-motor 16 are connected by the input bus bars 82U, 82V and 82_{W}, respectively. Accordingly, the output bus bars 67_{U}, 67V and 67W and the input bus bars 82U, 82V and 82W can be shortened and therefore, wirings can be simplified, the cost of the driving apparatus can be reduced and power consumption can be reduced. Further, the driving apparatus can be made light-weighted.

Meanwhile, as mentioned above, the inverter 53 for the drive motor and the inverter 54 for the generator-motor are installed to arrange to be contiguous to each other. Further, the inverter 53 for the drive motor and the inverter 54 for the generator-motor are attached to the driving apparatus case 10 at positions in which a sum of lengths of the first and the second lead wires L_{MU}, L_{MV}, L_{MW}, L_{GU}, L_{GV} and L_{GW} when the first lead wires L_{MU}, L_{MV} and L_{MV} are connected with the inverter 53 for the drive motor and the second lead wires L_{GU}, L_{GV} and L_{GW} are connected with the inverter 54 for the generator-motor, becomes shorter than a sum of lengths of the first and the second lead wires L_{MV}, L_{MV}, L_{MW}, L_{MV}, L_{GV} and L_{GW} when the first lead wires L_{MU}, L_{MV} and L_{MV} are connected with the inverter 54 for the generator-motor and the second lead wires L_{GU}, L_{GV} and L_{GW} are connected with the inverter 53 for the drive motor (hereinafter, referred to as "lead wire length shortening portions").

In this case, the lengths of the first lead wires L_{MU}, L_{MV} and L_{MV} are distances from a take-out portion 25a where the first lead wires L_{MU}, L_{MV} and L_{MV} are taken out from a coil end of the stator coil 39 of the stator 38 to the terminals 68U, 68V and 68W and the lengths of the second lead wires L_{GU}, L_{GV} and L_{GW} are distances from a take-out portion 16a where the second lead wires L_{GU}, L_{GV} and L_{GW} are taken out at a coil end of the stator coil of the stator 22 to the terminals 83U, 83V and 83W.

In this way, the inverter 53 for the drive motor and the inverter 54 for the generator-motor are arranged at the lead wire length shortening positions and accordingly, wirings can be simplified by that amount, the cost of the driving apparatus can be reduced and the power consumption can be reduced. Further, the driving apparatus can be made light-weighted.

Further, the driving apparatus case 10 and the inverter case 46 are formed by a metal and constitute a cabinet member which is electromagnetically shielded. Accordingly, in accordance with operating the inverter 53 for the drive motor and the inverter 54 for the generator-motor, even when an electromagnetic wave is generated at inside of the cabinet member, the electromagnetic wave can be prevented from leaking to outside of the driving apparatus case 10. Further, the first and the second lead wires L_{MU}, L_{MV}, L_{MV}, L_{GU}, L_{GV} and L_{GW} all comprise electromagnetically shielded lines and accordingly, even when phase current flows in the first and the second lead wires L_{MV}, L_{MV}, L_{MW}, L_{GU}, L_{GV} and L_{MV}, the electromagnetic wave can be prevented from generating. As a result, there can be prevented electromagnetic wave hazard such as erroneous operation or the like from causing by effecting influence by electromagnetic wave on an engine control apparatus, an automatic transmission control apparatus, auxiliary machines and so on, not illustrated.

Further, the drive motor 25 and the generator-motor 16 are contained in the drive motor and generator-motor containing chamber 10a and the inverter 53 for the drive motor and the inverter 54 for the generator-motor are installed to arrange at the lead wire length shortening portions and accordingly, the first and the second lead wires L_{MV}, L_{MV}, L_{MV}, L_{GU}, L_{GV} and L_{GW} are not exposed to outside of the driving apparatus case 10. Therefore, even when the electromagnetic wave is slightly generated in accordance with flowing phase current to the first and the second lead wires L_{MU}, L_{MV}, L_{MV}, L_{GU}, L_{GV} and L_{MV}, the electromagnetic wave can be prevented from leaking to outside of the driving apparatus case 10.

Further, although according to the embodiment, the first inverter is the inverter 53 for the drive motor and the second inverter is the inverter 54 for the generator-motor, the first inverter may be constituted by an inverter for the generator-motor and the second inverter can be constituted by an inverter for the drive motor.

Further, since the top wall 49 is inclined, the inverter case 46 is also inclined in correspondence with the top wall 49. Therefore, when the driving apparatus is installed to arrange such that the generator-motor 16 is disposed on the front side (right side in Fig. 1) and the drive motor 25 is disposed on the rear side (left side of Fig. 1) in conformity with an inclination of an engine hood (bonnet) of the hybrid type vehicle, containment of the driving apparatus can be carried out excellently. As a result, the driving apparatus can be downsized.

Further, the inverter apparatus 50 can also be inclined in correspondence with the top wall 49 and accordingly, the gravitational center of the driving apparatus can be lowered. Accordingly, the driving apparatus can be stabilized. Further, the inverter apparatus 50 and the output shaft 12 can be made adjacent to each other and accordingly, the moment of inertia operating while centering on the output shaft 12 can be reduced. As a result, the vibration isolating performance of the driving apparatus can be promoted.

Further, according to the medium flow path 56, a front side thereof in the progressing direction of the hybrid type vehicle is lower and a rear side thereof (left side in Fig. 1) is higher and accordingly, when cooling water is set to flow from the front side in the progressing direction of the hybrid type vehicle (right side in Fig. 1) toward the rear side (left side in Fig. 1), air stored at inside of the medium flow path 56 can be delivered to the rear side along with flow of the cooling water. Accordingly, air bleeding at inside of the medium flow path 56 can easily be carried out only by forming an air bleeding hole at the rear end (left end in Fig. 1) of the medium flow path 56. Further, there is no need of installing to arrange other air bleeding structure.

Next, an explanation is given of a second embodiment of the invention. Further, portions having structures the same as those in the first embodiment are attached with the same notations and an explanation thereof will be omitted.

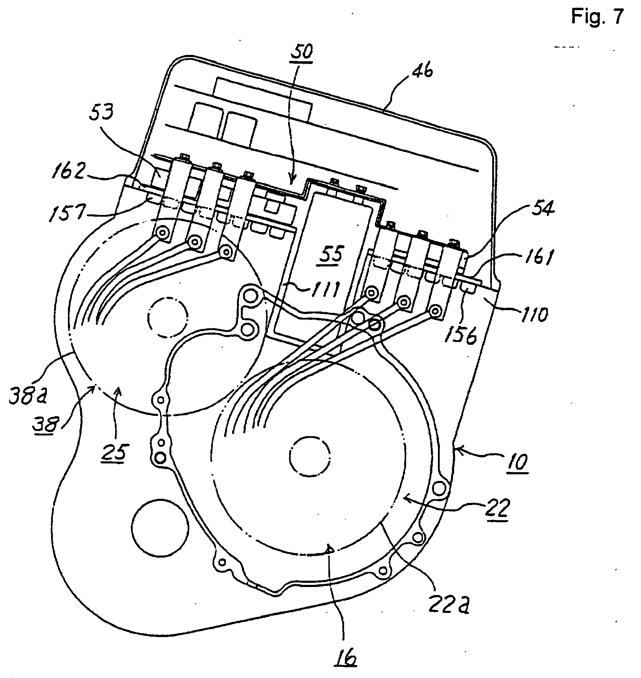

Fig. 7 is a sectional view of a driving apparatus according to the second embodiment of the invention and Fig. 8 is plane view of an inverter apparatus according to the second embodiment of the invention.

In this case, both ends of the stator 22 of the generator-motor 16 is fixed to the driving apparatus case 10 by shrink fitting and no space is formed between the outer peripheral face 22a of the stator 22 and the driving apparatus case 10. Similarly both ends of the stator 38 of the drive motor 25 is fixed to the driving apparatus case 10 also by shrink fitting and no space is formed between the outer peripheral face 38a of the stator 38 and the driving apparatus case 10.

Further, a bottomed recess portion 111 for containing the smoothing condenser 55 is formed to project an end portion thereof to the side of the generator-motor 16 substantially at a central portion of an upper end portion 110 of the driving apparatus case 10. A portion of the smoothing condenser 55 is disposed on inner sides of common tangential lines of the drive motor 25 and the generator-motor 16. Further, an upper face of the upper end portion 110 is formed with a groove contiguous to the recess portion 111 and by covering the groove by covers 161 and 162, medium flow paths 156 and 157 are formed. The covers 161 and 162 are formed by a metal having excellent heat conductivity. Further, a heat sink for radiating heat which hermetically closes the opening portion of the driving apparatus case 10 is constituted by the upper end portion 110 and the covers 161 and 162 and a portion of the partition wall arranged between the driving apparatus case 10 and the inverter case 46 as the control apparatus case is constituted by the heat sink.

Accordingly, not only the inverter apparatus 50 can be cooled by cooling water, not illustrated, flowing in the medium flow paths 156 and 157 but also the generator-motor 16 and the drive motor 25 can be cooled via the driving apparatus case 10. Further, although according to the embodiment, the medium flow paths 156 and 157 are connected by a communicating flow path, not illustrated and the same cooling water flows, the respective medium flow paths can be formed independently from each other and the cooling water can be flowed separately from each other.

Next, an explanation is given of a third embodiment according to the invention. Further, portions having structures the same as those in the first embodiment are attached with the same notations and an explanation thereof will be omitted.

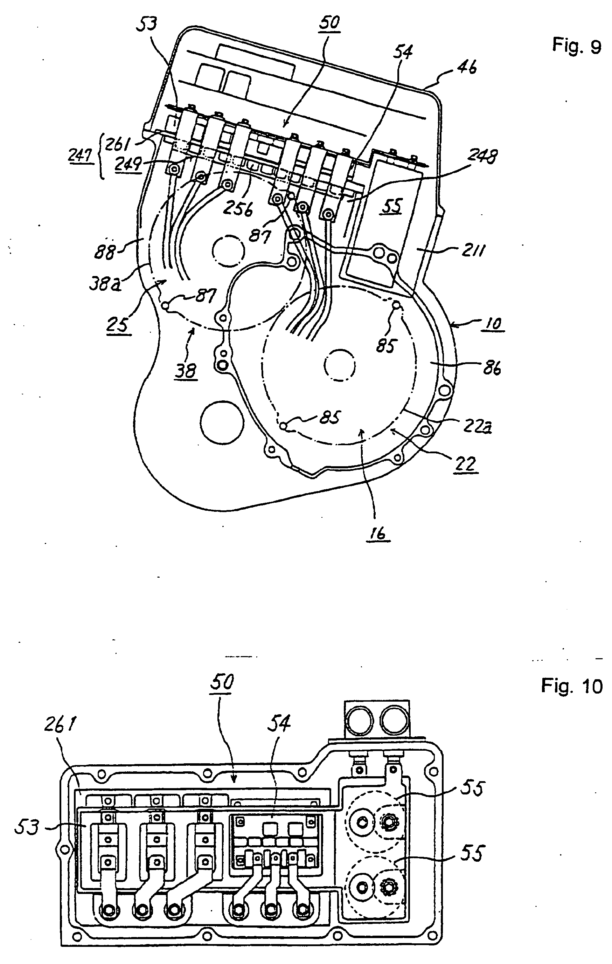

Fig. 9 is a sectional view of the driving apparatus according to a third embodiment of the invention and Fig. 10 is a plane view of an inverter apparatus according to the third embodiment of the invention.

In this case, the upper face of the driving apparatus case 10 is formed with a bottomed recess portion 211 for containing the smoothing condenser 55 at the front end portion (right end portion in Fig. 7) to project an end portion thereof to the side of the generator-motor 16. A portion of the smoothing condenser 55 is disposed on inner sides of common tangential lines of the drive motor 25 and the generator-motor 16. Further, an opening 248 is formed from a central portion of the upper face of the driving apparatus case 10 to the rear end portion (left end portion in Fig. 7) and a heat sink 247 for radiating heat is attached to cover the opening 248. The heat sink 247 comprises a medium flow path block 249 in a flat plate shape and a cover 261 and hermetically closes the driving apparatus case 10 and a portion of the partition wall arranged to install between the driving apparatus case 10 and the inverter case 46 as the control apparatus case is constituted by the front end portion formed with the recess portion 211 and the heat sink 247. Further, a groove is formed in the medium flow path block 249 and by covering the groove by the cover 261, the medium flow path 256 is formed. The cover 261 is formed by a metal having excellent heat conductivity.

Next, an explanation is given of a fourth embodiment according to the invention. Further, portions having structures the same as those in the first embodiment are attached with the same notations and an explanation thereof will be omitted.

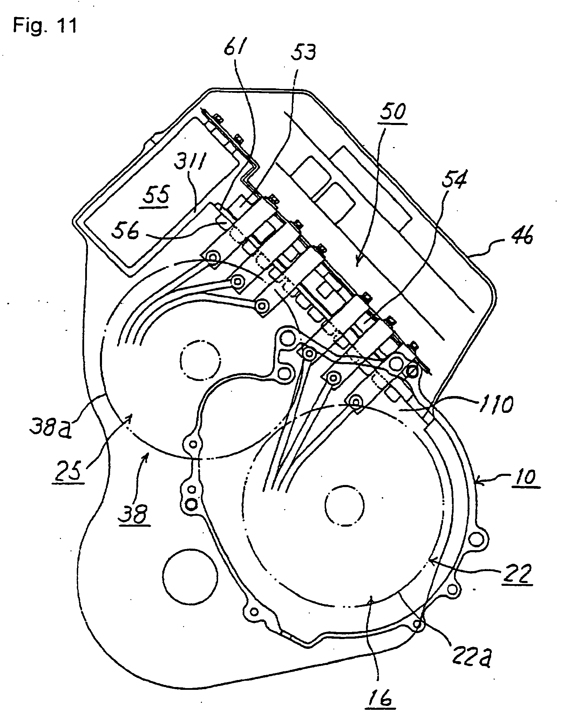

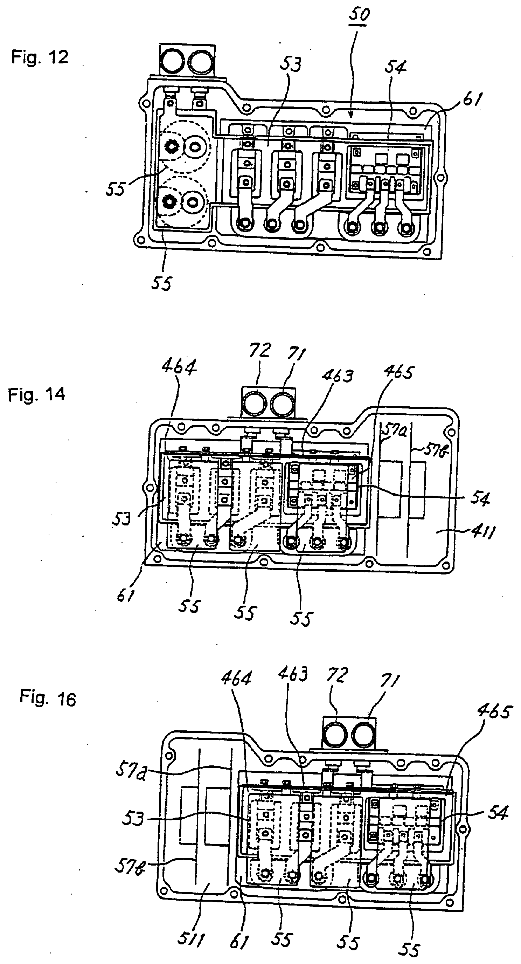

Fig. 11 is a sectional view of a driving apparatus according to a fourth embodiment of the invention and Fig. 12 is a plane view of an inverter apparatus according to the fourth embodiment of the invention.

In this case, both ends of the stator 22 of the generator-motor 16 are fixed to the driving apparatus case 10 by shrink fitting and no space is formed between the outer peripheral face 22a of the stator 22 and the driving apparatus case 10. Similarly, both ends of the stator 38 of the drive motor 25 are fixed to the driving apparatus case 10 also by shrink fitting and no space_ is formed between the outer peripheral face 38a of the stator 38 and the driving apparatus case 10.

Further, there is formed a bottomed recess portion 311 for containing the smoothing condenser 55 at the rear end portion (left end portion in Fig. 9) of the upper end portion 110 of the driving apparatus case 10 to project an end portion thereof. Further, a groove is formed at the upper face of the upper end portion 110 and by covering the groove by the cover 61, the medium flow path 56 is formed. The cover 61 is formed by a metal having excellent heat conductivity. Further, a heat sink for radiating heat which hermetically closes the opening portion of the driving apparatus case 10 is constituted by the upper end portion 110 and the cover 61 and a portion of the partition wall installed to arrange between the driving apparatus case 10 and the inverter case 46 as the control apparatus case, is constituted by the heat sink.

Next, an explanation is given of a fifth embodiment according to the invention. Further, portions having structures the same as those in the first embodiment are attached with the same notations and an explanation thereof will be omitted.

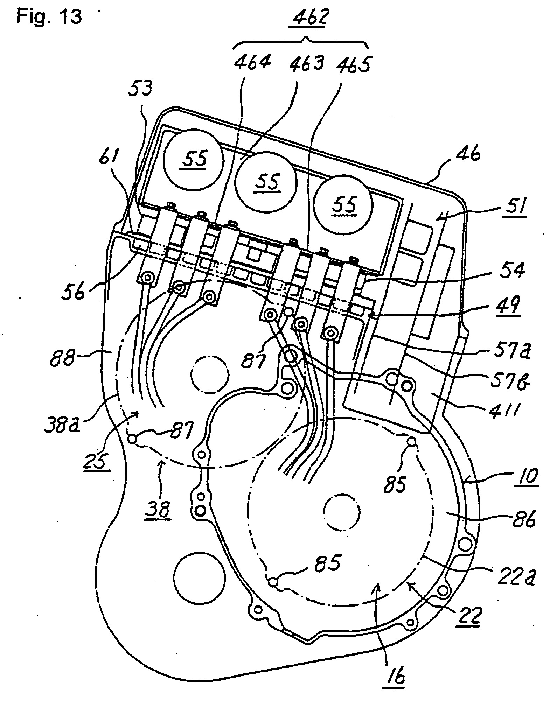

Fig. 13 is a sectional view of a driving apparatus according to the fifth embodiment of the invention and Fig. 14 is a plane view of an inverter apparatus according to the fifth embodiment of the invention.

In this case, a bottomed recess portion 411 for containing the control apparatus 51 is formed at the front end portion (right end portion in Fig. 11) of the driving apparatus case 10. Further, a groove is formed from a central portion of the top wall 49 of the driving apparatus case 10 to the rear end portion (left end portion in Fig. 11) and by covering the groove by the cover 61, the medium flow path 56 is formed. The cover 61 is formed by a metal having excellent heat conductivity. Further, a heat sink for radiating heat is constituted by the top wall 49 and the cover 61 and a portion of the partition wall installed to arrange between the driving apparatus case 10 and the inverter case 46 as the control apparatus case is constituted by the heat sink. Further, the control boards 57a and 57b of the control apparatus 51 are installed to arrange substantially vertically at inside of the recess portion 411.

Further, a main wiring board 462 is installed to arrange above the inverter 53 for the drive motor as the first inverter and the inverter 54 for the generator-motor as the second inverter spaced apart therefrom by a predetermined interval. The main wiring board 462 is constituted by a common wiring board portion 463 extended in the vertical direction for connecting the smoothing condenser 55 with a battery, not illustrated, via the terminals 71 and 72, a wiring board portion 464 for motor disposed above the inverter 53 for the drive motor for connecting the wiring board portion 463 with the inverter 53 for the drive motor and a wiring board portion 465 for generator disposed above the inverter 54 for the generator-motor for connecting the wiring board portion 463 with the inverter 54 for the generator-motor. The smoothing condenser 55 is attached to the wiring board portion 463 above the wiring board portions 464 and 465.

Next, an explanation is given of a first embodiment according to the invention. Further, portions having structures the same as those in the first embodiment are attached with the same notations and an explanation thereof will be omitted.

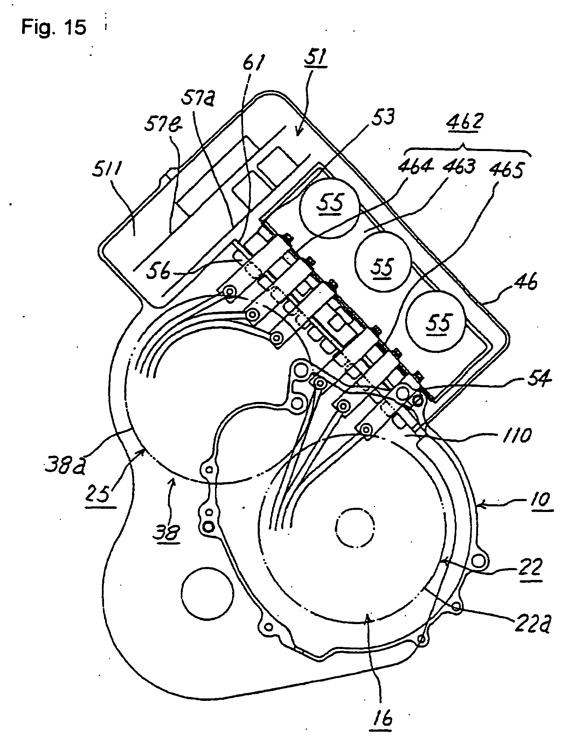

Fig. 15 is a sectional view of a driving apparatus according to the sixth embodiment of the invention and Fig. 16 is a plane view of an inverter apparatus according to the sixth embodiment of the invention.

In this case, a bottomed recess portion 511 for containing the control apparatus 51 is formed at the rear end portion (left end portion in Fig. 13) of the driving apparatus case 10. Further, a groove is formed from a central portion of the upper end portion 110 of the driving apparatus case 10 to the front end portion (right end portion in Fig. 13) and by covering the groove by the cover 61, the medium flow path 56 is formed. The cover 61 is formed by a metal having an excellent heat conductivity. Further, a heat sink for radiating heat which hermetically closes the opening portion of the driving apparatus case 10 is constituted by the upper end portion 110 and the cover 61 and the portion of the partition wall installed to arrange between the driving apparatus case 10 and the inverter case 46 as the control apparatus case is constituted by the heat sink. Further, the control boards 57a and 57b of the control apparatus 51 are installed to arrange to be inclined at inside of the recess portion 51.

Further, the wiring board 462 is installed to arrange above the inverter 53 for the drive motor as the first inverter and the inverter 54 for the generator-motor as the second inverter spaced apart therefrom by a predetermined interval. The main wiring board 462 is constituted by the common wiring board portion 463 extended in the vertical direction for connecting the smoothing condenser 55 and a battery, not illustrated via the terminals 71 and 72, the wiring board portion 464 for motor disposed above the inverter 53 for the drive motor for connecting the wiring board portion 463 with the inverter 53 for the drive motor and the wiring board portion 465 for generator disposed above the inverter 54 for the generator-motor for connecting the wiring board portion 463 with the inverter 54 for the generator-motor. The respective smoothing condensers 55 are attached to the wiring board portion 463 above the wiring board portions 464 and 465.

As has been explained in details, according to the invention, a driving apparatus includes a generator-motor installed to arrange on a first axis line, a drive motor installed to arrange on a second axis line in parallel with the first axis line, a driving apparatus case containing the generator-motor and the drive motor, an inverter for the generator-motor and the drive motor and a smoothing condenser for smoothing power source voltage of the inverter.

Further, the inverter is attached to the driving apparatus case to dispose in diameter directions of the generator-motor and the drive motor and the smoothing condenser is attached to inside of the driving apparatus case to project an end portion thereof.

In this case, the inverter can be integrated to the driving apparatus case as a sub assembly and therefore, not only steps of integrating the inverter can be respectively made independent but also operation of the inverter can be confirmed before being integrated to the driving apparatus case.

Further, there is no need of respectively separately connecting the inverter for the drive motor to the drive motor and the inverter for the generator-motor to the generator-motor and accordingly, the driving apparatus can be downsized.

Further, a heat sink is arranged at an upper end portion of the driving apparatus case and therefore, the driving apparatus case can be cooled. Therefore, oil flowing at inside of the driving apparatus case can be cooled and therefore, an oil cooler is dispensed with.

Further, the inverter is arranged to dispose in diameter directions of the generator-motor and the drive motor and accordingly, output bus bars and input bus bars can be shortened. Therefore, wirings can be simplified, the cost of the driving apparatus can be reduced and power consumption can be reduced. Further, the driving apparatus can be made light-weighted.

Still other driving apparatus according to the invention includes a generator-motor, a drive motor, a driving apparatus case for containing the generator-motor and the drive motor, a first inverter for operating one of the generator-motor and the drive motor, a second inverter for operating other of the generator-motor and the drive motor, a first lead wire for connecting the one of the generator-motor and the drive motor to the first inverter and a second lead wire for connecting the other of the generator-motor and the drive motor to the second inverter.

Further, the first and the second inverters are attached to the driving apparatus case at positions in which a sum of lengths of the first and the second lead wires when the first lead wire and the first inverter are connected to each other and the second lead wire and the second inverter are connected to each other, is shorter than a sum of the lengths of the first and the second lead wires when the first lead wire and the second inverter are connected to each other and the second lead wire and the first inverter are connected to each other.

In this case, the first and the second inverters are placed at the lead wire length shortening positions and accordingly, wirings can be simplified by that amount, the cost of the drive apparatus can be reduced and the power consumption can be reduced. Further, the driving apparatus can be made light-weighted.

Further, the generator-motor and the drive motor are contained at inside of the driving apparatus case and accordingly, the first and the second lead wire are not exposed to outside of the driving apparatus case.

Accordingly, even when electromagnetic wave is generated in accordance with flowing phase current to the first and the second lead wires, the electromagnetic wave can be prevented from leaking to outside of the driving apparatus case. As a result, electromagnetic wave hazard such as erroneous operation or the like can be prevented from causing by effecting influence by the electromagnetic wave on an engine control apparatus, an automatic transmission control apparatus, auxiliary machines and so on.

The first and the second inverters are attached to the driving apparatus case and accordingly, the inverter apparatus can be integrated to the driving apparatus case as a sub assembly. Accordingly, not only steps of integrating the inverter apparatus can be made independent but also operation of the inverter apparatus can be confirmed before being integrated to the driving apparatus case.

Further, the partition wall for partitioning the inverter apparatus and inside of the driving apparatus case is formed by a portion of the driving apparatus case and accordingly, there is no need of using a special wall member. Accordingly, the driving apparatus can be made light-weighed.

Still other driving apparatus of the invention includes a generator-motor, a drive motor, a driving apparatus case for containing the generator-motor and the drive motor, a first inverter for operating one of the generator-motor and the drive motor, a second inverter for operating other of the generator-motor and the drive motor, a first lead wire for connecting the one of the generator-motor and the drive motor to the first inverter and a second lead wire for connecting the other of the generator-motor and the drive motor to the second inverter.

Further, each of the first and the second lead wires is taken out from one end side in an axial direction of each of the generator-motor and the drive motor.

In this case, operation of connecting the first and the second lead wires can be carried out on the same side and therefore, the operation can be simplified. Accordingly, integrating performance of the drive motor and the generator-motor can be promoted.

Still other driving apparatus of according to the invention further includes a gear train at inside of the driving apparatus case for transmitting power of the drive motor to a differential apparatus, wherein at least one of the first and the second lead wires is taken out from at least one of the drive motor and the generator-motor on an outer side in a diameter direction of the gear train within a range of a length in an axial direction thereof.

In this case, an outer diameter of a predetermined gear in the gear train is extremely smaller than an outer diameter of the drive motor and accordingly, there can be utilized a dead space formed at inside of the driving apparatus case by a difference between the outer diameter of the gear and the outer diameter of the drive motor. Accordingly, the dead space can effectively be utilized by taking out at least one of the first and the second lead wires from at least one of the drive motor and the generator-motor in the dead space. As a result, the driving apparatus can be downsized. Further, the first and the second lead wires are not taken out from a side of a rear cover of the driving apparatus case and accordingly, the rear cover is not projected and can be formed flatly. Therefore, when the driving apparatus is mounted to a hybrid type vehicle, a side member of the hybrid type vehicle and the rear cover can be prevented from interfering with each other.

Still other driving apparatus according to the invention includes a generator-motor, a drive motor, a driving apparatus case for containing the generator-motor and the drive motor, a first inverter for operating one of the generator-motor and the drive motor and a second inverter for operating other of the generator-motor and the drive motor.

Further, the first and the second inverters are installed to arrange on an upper side of the driving apparatus case to be inclined with a front side thereof in a progressing direction of a vehicle to be on a lower side.

In this case, when the driving apparatus is installed to arrange such that the generator-motor is disposed on the front side and the drive motor is disposed at the rear side in conformity with an inclination of an engine hood of the hybrid type vehicle, containment of the driving apparatus can be carried out excellently. As a result, the driving apparatus can be downsized.

Further, the inverter apparatus can also be inclined and accordingly, the gravitational center of the driving apparatus can be lowered. Therefore, the driving apparatus can be stabilized. Further, the inverter apparatus and the output shaft of the engine can be made adjacent to each other and accordingly, the moment of inertia operating while centering on the output shaft can be reduced. As a result, the vibration isolating performance of the driving apparatus can be promoted.

Further, according to the medium flow path formed at the partition wall for partitioning the inverter apparatus from inside of the driving apparatus case, a front side thereof in the progressing direction of the hybrid type vehicle is low and a rear side thereof is high and accordingly, when the medium is set to flow from the front side in the progressing direction of the hybrid type vehicle toward the rear side, air stored at inside of the medium flow path can be delivered to the rear side along with flow of the medium. Accordingly, air bleeding at inside of the medium flow path can easily be carried out only by forming an air bleeding hole at the rear end of the medium flow path. Further, there is no need of installing to arrange other air bleeding structure.

Still other driving apparatus according to the invention includes a generator-motor, a drive motor, a driving apparatus case for containing the generator-motor and the drive motor, a first inverter for operating one of the generator-motor and the drive motor and a second inverter for operating other of the generator-motor and the drive motor.

Further, a partition wall for attaching the first and the second inverters is installed to arrange at the driving apparatus case and a heat sink is formed at the partition wall.

In this case, not only the inverter apparatus and the control apparatus can be cooled directly and sufficiently but also the driving apparatus case is cooled and the drive motor and the generator-motor can be cooled by cooling oil, not illustrated, flowing at inside of the driving apparatus case. Therefore, the first and the second inverters can be cooled by the medium flowing in the common medium flow path and accordingly, the medium flow path can be simplified and the driving apparatus can be downsized. Further, by cooling the driving apparatus case, the oil can be cooled and accordingly, an air cooler is dispensed with and the oil path can be simplified.

Further, according to still other driving apparatus of the invention, the partition wall is formed on one plane.

In this case, the partition wall is commonly used by the first and the second inverters and accordingly, the driving apparatus can be downsized.

Further, according to still other driving apparatus of the invention, the generator-motor is installed to arrange on a first axis line and the drive motor is installed to arrange on a second axis line in parallel with the first axis line.

In this case, the generator-motor and the drive motor are installed to arrange on the axis lines in parallel with each other and accordingly, a speed reduction ratio between the first axis line and the second axis line can freely be set. Therefore, the degree of freedom of design of a torque transmitting mechanism can be promoted. As a result, the drive motor and the generator-motor can be driven under the best condition.

Further, according to still other driving apparatus of the invention, the first and the second inverters are extended along a plane in parallel with respective tangential lines of the generator-motor and the drive motor.

In this case, a dimension in the axial direction of the driving apparatus can be reduced and accordingly, there can be promoted mountability of the driving apparatus in respect of a hybrid type vehicle in which a dimension in the width direction is restricted, particularly, a hybrid type vehicle of FF type.

While the invention has been described with reference to preferred embodiments, the foregoing embodiments are merely illustrative of the invention and should not be construed as limiting the invention. Various modifications and applications may be adopted by those skilled in the art without departing from the scope of the invention as defined by the appended claims.

## Claims

1. A driving apparatus comprising a generator-motor (16), a drive motor (25), a driving apparatus case (10) for containing the generator-motor (16) and the drive motor (25), a first inverter (53) for operating one of the generator-motor (16) and the drive motor (25), a second inverter (54) for operating other of the generator-motor (16) and the drive motor (25), a first lead wire (L_{MU}, L_{MV}, L_{MW}) for connecting one of the generator-motor (16) and the drive motor (25) to the first inverter (53) and a second lead wire (L_{GU}, L_{GV}, L_{GW}) for connecting other of the generator-motor (16) and the drive motor (25) to the second inverter (54), **characterized in that** each of the first and the second lead wires (L_{MU}, L_{MV}, L_{MW}, L_{GU}, L_{GV}, L_{GW}) is taken out from one end side in an axial direction of each of the generator-motor (16) and the drive motor (25).

2. The driving apparatus according to claim 1, further comprising a gear train (27, 32, 33, 35) at inside of the driving apparatus case (10) for transmitting power of the drive motor (25) to a differential apparatus (36), wherein at least one of the first and the second lead wires (L_{MU}, L_{MV}, L_{MW}, L_{GU}, L_{GV}, L_{GW}) is taken out from at least one of the drive motor (25) and the generator-motor (16) on an outer side in a diameter direction of the gear train within a range of a length in an axial direction thereof.

3. The driving apparatus according to any one of claims 1 or 2, wherein the generator-motor (16) is installed to arrange on a first axis line (SH1) and the drive motor (25) is installed to arrange on a second axis line (SH2) in parallel with the first axis line (SH1).

4. The driving apparatus according to any one of claims 1 to 3, wherein the first and the second inverters (53, 54) are extended along a plane in parallel with respective tangential lines of the generator-motor (16) and the drive motor (25).

5. The driving apparatus according to any one of claims 1 to 4, wherein the first and the second inverters (53, 54) are respectively an inverter for the generator-motor (16) and an inverter for the drive motor (25).

6. The driving apparatus according to any one of claims 1 to 4, wherein the first and the second inverters (53, 54) are respectively an inverter for the drive motor (25) and an inverter for the generator-motor (16).

## Patentansprüche

1. Antriebsvorrichtung mit einem Generatormotor (16), einem Antriebsmotor (25), einem den Generatormotor (16) und den Antriebsmotor (25) aufnehmenden Antriebsvorrichtungsgehäuse (10), einem ersten Invertierer (53) zum Betreiben eines Motors unter dem Generatormotor (16) und dem Antriebsmotor (25), einem zweiten Invertierer (54) zum Betreiben des anderen Motors unter dem Generatormotor (16) und dem Antriebsmotor (25), einer ersten Anschlussleitung (L_{MU}, L_{MV}, L_{MW}) zum Verbinden des einen Motors unter dem Generatormotor (16) und dem Antriebsmotor (25) mit dem ersten Invertierer (53) und einer zweiten Anschlussleitung (L_{GU}, L_{GV}, L_{GW}) zum Verbinden des anderen Motors unter dem Generatormotor (16) und dem Antriebsmotor (25) mit dem zweiten Invertierer (54), **dadurch gekennzeichnet**, das die erste und die zweite Anschlussleitung (L_{MU}, L_{MV}, L_{MW}, L_{GU}, L_{GV}, L_{GW}) von einer Endseite in der axialen Richtung des Generatormotors (16) und des Antriebsmotor 25 herausgeführt sind.

2. Antriebsvorrichtung nach Anspruch 1, ferner mit einem an der Innenseite des Antriebsvorrichtungsgehäuses (10) angeordneten Getriebezug (27, 32, 33, 35) zum Übertragen von Leistung vom Antriebsmotor (25) zu einer Differentialvorrichtung (36), wobei die erste und/oder die zweite Anschlussleitung (L_{MU}, L_{MV}, L_{MW}, L_{GU}, L_{GV}, L_{GW}) vom Antriebsmotor (25) und/oder Generatormotor (16) an einer Außenseite in einer Durchmesserrichtung des Getriebezugs innerhalb eines Längenbereichs in einer axialen Richtung davon herausgeführt ist.

3. Antriebsvorrichtung nach einem der Ansprüche 1 oder 2, wobei der Generatormotor (16) auf einer ersten Achsenlinie (SH1) angeordnet ist und der Antriebsmotor (25) auf einer zweiten Achsenlinie (SH2) parallel zur ersten Achsenline (SH1) angeordnet ist.

4. Antriebsvorrichtung nach einem der Ansprüche 1 bis 3, wobei der erste Invertierer (53) und der zweite Invertierer (54) sich entlang einer parallel zu den Tangentiallinien des Generatormotors (16) bzw. des Antriebsmotors (25) angeordneten Ebene erstrecken.

5. Antriebsvorrichtung nach einem der Ansprüche 1 bis 4, wobei der erste und der zweite Invertierer (53, 54) ein Invertierer für den Generatormotor (16) bzw. ein Invertierer für den Antriebsmotor (25) sind.

6. Antriebsvorrichtung nach einem der Ansprüche 1 bis 4, wobei der erste und der zweite Invertierer (53, 54) ein Invertierer für den Antriebsmotor (25) bzw. ein Invertierer für den Generatormotor (16) sind.

## Revendications

1. Système d'entraînement comprenant un moteur générateur (16), un moteur d'entraînement (25), un carter (10) du système d'entraînement pour contenir le moteur générateur (16) et le moteur d'entraînement (25), un premier inverseur (53) pour actionner l'un parmi le moteur générateur (16) et le moteur d'entraînement (25), un second inverseur (54) pour actionner l'autre parmi le moteur générateur (16) et le moteur d'entraînement (25), un premier fil de sortie (L_{MU}, L_{MV}, L_{MW}) pour raccorder l'un parmi le moteur générateur (16) et le moteur d'entraînement (25) au premier inverseur (53) et un second fil de sortie (L_{GU}, L_{GV}, L_{GW}) pour raccorder l'autre parmi le moteur générateur (16) et le moteur d'entraînement (25) au second inverseur (54), **caractérisé en ce que** chacun des premier et second fils de sortie (L_{MU}, L_{MV}, L_{MW}, L_{GU}, L_{GV}, L_{GW}) est retiré d'un côté d'extrémité dans une direction axiale de chacun parmi le moteur générateur (16) et le moteur d'entraînement (25).

2. Système d'entraînement selon la revendication 1, comprenant en outre un train d'engrenages (27, 32, 33, 35) à l'intérieur du carter (10) du système d'entraînement pour transmettre la puissance du moteur d'entraînement (25) à un système différentiel (36), dans lequel au moins l'un des premier et second fils de sortie (L_{MU}, L_{MV}, L_{MW}, L_{GU}, L_{GV}, L_{GW}) est retiré d'au moins l'un parmi le moteur d'entraînement (25) et le moteur générateur (16) sur un côté externe dans une direction diamétrale du train d'engrenages dans une plage d'une longueur dans sa direction axiale.

3. Système d'entraînement selon l'une quelconque des revendications 1 ou 2, dans lequel le moteur générateur (16) est installé pour être disposé sur une première ligne axiale (SH1) et le moteur d'entraînement (25) est installé pour être disposé sur une seconde ligne axiale (SH2) en parallèle à la première ligne axiale (SH1).

4. Système d'entraînement selon l'une quelconque des revendications 1 à 3, dans lequel les premier et second inverseurs (53, 54) sont étendus le long d'un plan en parallèle avec des lignes tangentielles respectives du moteur générateur (16) et du moteur d'entraînement (25).

5. Système d'entraînement selon l'une quelconque des revendications 1 à 4, dans lequel les premier et second inverseurs (53, 54) sont respectivement un inverseur pour le moteur générateur (16) et un inverseur pour le moteur d'entraînement (25).

6. Système d'entraînement selon l'une quelconque des revendications 1 à 4, dans lequel les premier et second inverseurs (53, 54) sont respectivement un inverseur pour le moteur d'entraînement (25) et un inverseur pour le moteur générateur (16).
